(19)

Europäisches Patentamt
European Patent Office
Office européen des brevets

(11) **EP 4 578 923 A1**

(12) **EUROPEAN PATENT APPLICATION**

(43) Date of publication:
02.07.2025 Bulletin 2025/27

(21) Application number: 24222219.8

(22) Date of filing: 20.12.2024

(51) International Patent Classification (IPC):
*C09J 7/38* (2018.01)   *C09J 133/08* (2006.01)
*G09F 3/10* (2006.01)

(52) Cooperative Patent Classification (CPC):
(C-Sets available)
**C09J 7/385; C09J 133/08; G09F 3/10;**
C09J 2203/334; C09J 2301/122; C09J 2493/00
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.12.2023 US 202318399979

(71) Applicant: **UPM Raflatac Oy**
**33310 Tampere (FI)**

(72) Inventor: **Pernecker, Tibor**
**00100 Helsinki (FI)**

(74) Representative: **Berggren Oy**
**P.O. Box 16**
**Eteläinen Rautatiekatu 10A**
**00101 Helsinki (FI)**

(54) **WASH-OFF LABEL**

(57)    The invention relates to a method for manufacturing a label (2) comprising a face (1) and a pressure sensitive adhesive layer (4), wherein the method comprises steps of applying an acrylic adhesive onto a first surface of the face (1), wherein the acrylic adhesive comprises a wash-off additive comprising a resinous material and a grafted rosin ester, and drying the acrylic adhesive in order to form an acrylic pressure sensitive adhesive onto the first surface of the face (1), thereby obtaining the label (2). The invention further relates to a label comprising a face (1) and a pressure sensitive adhesive layer (4), wherein the acrylic adhesive comprises a wash-off additive comprising a resinous material and a grafted rosin ester.

Fig.1

EP 4 578 923 A1

(52) Cooperative Patent Classification (CPC): (Cont.)

C-Sets
C09J 2433/00, C09J 2493/00

**Description**

Technical field

The application relates to pressure-sensitive wash-off labels. The application further relates to a method for manufacturing a pressure-sensitive wash-off label.

Background

It is general practice to apply a label to a surface of an item to provide decoration, and/or to display information about the product being sold, such as the content of the item, a trade name or logo. Alternative type of labelling technologies and labels are available, such as pressure-sensitive, wet glue, wrap around and shrink sleeve labels.
Labels include, for example, labels used for packaging of beverages, food products, health and personal care products, pharmaceuticals, industrial chemicals, household chemicals or retail products.
Some example classes of labels are repositionable labels, removable labels, (washable) wash-off labels, resealable labels, no-look labels, deep freezer labels and security labels.
Containers, such as bottles, in the beverage industry are generally re-used or recycled. Therefore, there is a need for labels which are easily removed from the surface of the container during washing processes. Thus, wash-off labels are an important topic, for example, in beverage industry.
The present specification particularly relates to pressure-sensitive wash-off labels that can be washed off from an article.

Summary

It is an object of this application to provide a label. Another object is to provide a combination of a label and an item, wherein the item is afterwards recycled or reused. Yet another object is to provide a method for manufacturing a label.
The label according to this specification is preferably a pressure-sensitive wash-off label.
Aspects of the invention are characterized by what is stated in the independent claims. Some preferred embodiments are disclosed in the dependent claims. These and other embodiments are disclosed in the description and figures.
Conventionally, washing temperatures of wash-off processes have been around +85°C. Due to environmental and cost reasons, nowadays a new target is to decrease washing temperature to 65°C - 75°C for filmic labels, and to 40°C for paper labels.
A label according to this specification comprises a face and a pressure sensitive adhesive layer for adhering the label to a surface of an item to be labelled.
The face according to this specification can comprise a thermoplastic film, preferably an oriented thermoplastic film. Alternatively, the face can be a paper face comprising cellulosic fibers.
The pressure sensitive adhesive layer of the label can comprise an acrylic pressure sensitive adhesive which comprises a wash-off additive.
Preferably, the acrylic pressure sensitive adhesive coating layer comprises

- butyl acrylate, or
- 2-ethylhexyl acrylate, or
- butyl acrylate and 2-ethylhexyl acrylate.

Total content of the butyl acrylate and 2-hydroxyethyl acrylate may be at least 50 wt.%, more preferably at least 70 wt.%, more preferably at least 80 wt.%, and most preferably at least 85 wt.%, calculated from the dry weight of the acrylic adhesive. These acrylic adhesives may be particularly advantageous for labels.
The acrylic pressure sensitive adhesive coating layer can comprise

- a rosin acid, and/or
- a copolymer of vinyl acetate and ethylene (VAE).

The wash-off additive can comprise a resinous material, preferably selected from a group consisting of a hydrocarbon resin, an alkyd resin, a polyamide resin, a rosin resin, and mixtures thereof, and a grafted rosin ester which is a rosin ester grafted with a capped polyalkylene glycol. The capped polyalkylene glycol is a polyalkylene glycol end-capped by an alkyl ether, preferably the capped polyalkylene glycol is a methyl ether capped polyethylene glycol. Technical effect of the wash-off additive is that washability of the label comprising an acrylic adhesive is substantially improved.

Surprisingly, the novel label comprising the modified adhesive comprising the acrylic adhesive and the wash-off additive clearly improved acrylic polymer properties in low temperature washing processes.

For example, for filmic faces, the novel label comprising the modified adhesive comprising the acrylic adhesive and the wash-off additive clearly improved acrylic polymer properties in low temperature washing processes at 65-75°C, even when using low alkaline water of 1%. Furthermore, for paper faces, the wash-off additive clearly improved acrylic polymer wash-off properties in low temperature washing processes at 40°C in water, without an alkaline agent.

The wash-off additive can improve washability of the label when an amount of more than 4 wt.% is used, determined from total dry weight of the adhesive. Preferably, an amount of the wash-off additive is equal to or more than 5 wt.%, more preferably equal to or more than 10 wt.%, and most preferably equal to or more than 15 wt.%, determined from total dry weight of the adhesive. Technical effect is to substantially improve washability of the label. The best washing results can be obtained when amount of the wash-off additive is at least 10 wt.%, or at least 15 wt.%.

For cost reasons, the amount of the wash-off additive is preferably equal to or less than 25 wt.%, more preferably equal to or less than 22 wt.%, and most preferably equal to or less than 20 wt.%, or equal to or less than 18 wt.%, calculated from total dry weight of the adhesive.

In an advantageous example, the amount of the wash-off additive is in a range between 10 wt.% and 20 wt.%, preferably between 15 wt.% and 18 wt.%, determined from total dry weight of the adhesive. Technical effect of these embodiments is to improve washability of the label cost efficiently.

The novel label can be easily removed during a washing process. Thus, the washing time of the label may be substantially decreased, compared to solutions without the wash-off additive.

For improving washability of the label, a molar ratio between the rosin ester and the capped polyalkylene glycol can be 0.05:1 to 1:1, preferably at least 0.4:1, and most preferably from 0.7:1 to 0.9:1.

In order to further improve washability of the label, an amount of the grafted rosin ester with respect to the resinous material can be from about 1 wt.% to about 8 wt.%. In an advantageous embodiment, the resinous material comprises or is the rosin resin.

Moreover, to further improve washability of the label, the preferred polyalkylene glycol is a polyethylene glycol, and the alkyl ether is preferably a methyl ether. Most preferably, the capped polyalkylene glycol is a methyl ether capped polyethylene glycol for efficient and fast washing process of the label.

Preferably, the acrylic adhesive comprises 2-ethylhexyl acrylate and/or butyl acrylate. In the most advantageous embodiment, the acrylic adhesive comprises 2-ethylhexyl acrylate. The acrylic adhesive comprising the wash-off additive can cause adhesion of the pressure sensitive adhesive to the labelled item to be efficiently decreased during a washing process so that the PSA can still remain attached to the face.

If the face is a filmic face, the face can comprise an oriented thermoplastic film, such as a monoaxially oriented film or a biaxially oriented film, preferably the biaxially oriented film. The oriented thermoplastic films can provide improved mechanical properties to the direction of the orientation, compared to non-oriented thermoplastic films.

Thus, the label can comprise the monoaxially oriented thermoplastic film, such as a monoaxially oriented polypropylene film. The monoaxially oriented thermoplastic film can be monoaxially oriented in machine direction of the film. Alternatively, the monoaxially oriented thermoplastic film can be monoaxially oriented in transverse direction of the film. Thanks to the monoaxially oriented film, mechanical properties of the thermoplastic film can be improved at least to said one direction, which can facilitate the processability and handling of the films in the process.

The label can comprise the biaxially oriented thermoplastic film, such as a biaxially oriented polypropylene film. Biaxially oriented thermoplastic films can provide improved mechanical properties for both directions of the film. This can improve easiness of handling the films in the manufacturing process as well as in the washing processes.

The face can be configured to shrink, preferably asymmetrically. This can allow reducing the washing time of the label.

As discussed, the face can comprise a polypropylene film. Polypropylene is well compatible e.g. with polyethylene, and using such similar polymers can provide a good adherence of the label to the article. Stiffness of polypropylene can be, e.g., smaller than a stiffness of polyester which can result in less flagging or winging on curved bottles. Some articles, such as soft bottles, can require such flexibility.

The face can comprise a glycol modified polyethylene terephthalate film. The glycol modified polyethylene terephthalate PETG can have an effect on flexibility of the face.

As discussed, the face can be a paper face. Technical effects of the paper face include good mechanical properties which can facilitate the processability and handling of the labels in the labeling process while the washing additive improves washability in the washing processes.

A method for manufacturing a label comprising a face and a pressure sensitive adhesive layer for adhering the label to a surface of an item to be labelled, can comprise the following steps:

- applying an acrylic adhesive onto a first surface of the face, wherein the acrylic adhesive comprises a wash-off additive, the wash-off additive comprising

○ preferably, an aqueous phase,

○ a resinous material, preferably selected from a group consisting of a hydrocarbon resin, an alkyd resin, a polyamide resin, a rosin resin, and mixtures thereof, and

○ a grafted rosin ester which is preferably a rosin ester grafted with a capped polyalkylene glycol, wherein the capped polyalkylene glycol is a polyalkylene glycol end-capped by an alkyl ether, preferably the capped polyalkylene glycol is a methyl ether capped polyethylene glycol,

and

- drying the acrylic adhesive in order to form an acrylic pressure sensitive adhesive onto the first surface of the face,

thereby obtaining the label.

A polymer gel content of the water-based acrylic adhesive can be at least 10%, preferably at least 20%, more preferably at least 40%, still more preferably at least 50%, and most preferably in a range between 60% and 75%. Technical effect of said polymer gel content, and particularly the range of at least 50%, preferably from 60% to 75%, can improve adhesion performance of the acrylic adhesive.

A mean particle size of the water-based acrylic adhesive can be at least 100 nm and 800 nm at the most, measured as a mean particle diameter. Thanks to said range, properties of the acrylic adhesive, such as a solid content and a viscosity level of the acrylic adhesive, can be controlled and easily adjusted to a desired level.

The label according to this specification can be adhered to a surface of an article, such as a beverage bottle. Thus, the label according to this specification can be used for labelling a beverage bottle.

In the washing process, the pressure sensitive adhesive, which is sensitive to the washing conditions, is efficiently detached from the labelled item. Thanks to the novel solution, adhesion of the adhesive efficiently decreases at the washing process, providing a technical effect of detaching the label efficiently from the item. Further technical effect is to efficiently prevent the detached labels from sticking to each other by the adhesives and forming agglomerates.

Thanks to the novel solution, the pressure sensitive adhesive can be easily and fast deactivatable at washing conditions, such as at a temperature at 65-75°C and alkaline conditions for filmic faces, and at 40°C in water for paper faces.

The alkaline conditions refer to an aqueous solution containing alkaline agent, such as NaOH, KOH, LiOH, MgOH, CaOH, or combination thereof. Probably the most common alkaline agent is sodium hydroxide NaOH, which is also called caustic soda. The alkaline liquid generally contains about 2-4% (w/w) of the alkaline agent(s), for example about 2%. However, thanks to the novel solution using the acrylic adhesive comprising the additive, alkaline conditions of down to 1%, such as down to 1% NaOH, can be used together with the washing temperature of 65-75°C for obtaining suitable washing conditions for efficiently washing off the filmic labels, and alkaline conditions are not needed at the washing temperature of 40°C for obtaining suitable washing conditions for efficiently washing off the paper labels.

Therefore, thanks to the novel label according to this specification, washing conditions can be more environmentally friendly than conventionally. Furthermore, the label can be recycled cost-efficiently.

The adhesives according to this specification can be designed to have approval for direct or indirect food contact (food-safety), which is a requirement in certain food related label end use areas. For example, many HDPE bottles require labels having approval for food contact.

Thus, the adhesive can be suitable and approved for direct food contact. Furthermore, the label according to this specification can be suitable for use in food applications.

In an embodiment, thanks to the label comprising the acrylic adhesive comprising the wash-off additive, lifetime of the washing solution can be prolonged and the contamination of the recyclable items, such as bottles, can be prevented.

Brief description of the drawings

In the following, the invention will be described in more detail with reference to the appended drawings, in which:

Fig. 1        shows, in a perspective view, an example embodiment of a label,
Fig. 2        shows a cross section of a label laminate comprising die-cut labels,

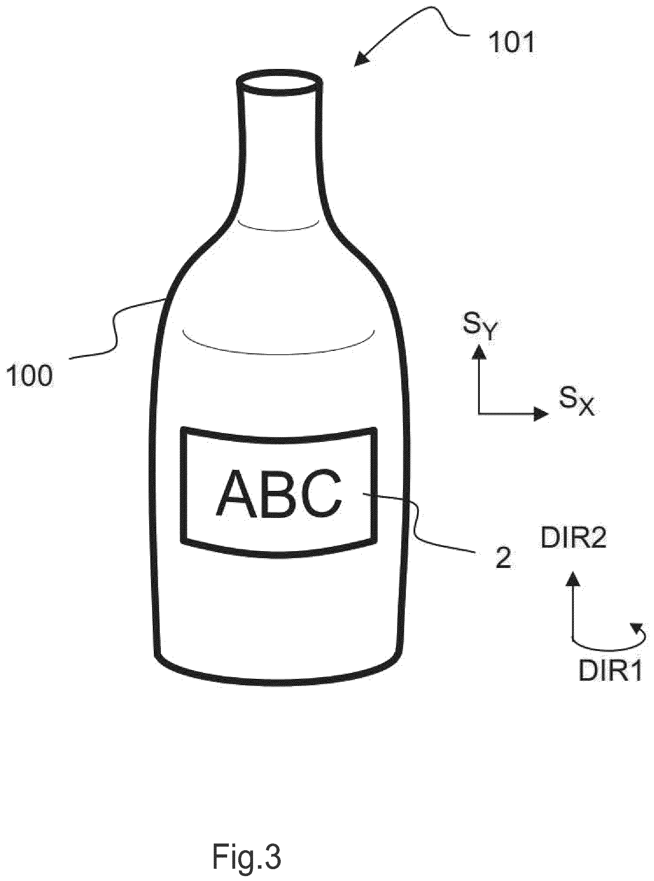

Fig. 3        shows a labelled item comprising a label, and
Figs 4a-d    show some photographs from experimental tests.

The Figures are intended to illustrate the general principles of the disclosed solution. Therefore, the illustrations in the Figures are not necessarily in scale or suggestive of precise layout of system components.

Detailed description

The solution is described in the following in more detail with reference to some embodiments, which shall not be regarded as limiting.

The following reference numbers and denotations are used in this application:

| | |
|---|---|
| Sx, Sy, Sz | orthogonal directions |
| MRK1 | marking, such as a printing, |
| DIR1 | first direction, |
| DIR2 | second direction, |
| 1 | a face, |
| 2 | a label, |
| 4 | an adhesive layer, |
| 5 | a release liner, |
| 6 | a release layer of the release liner, |
| 7 | a substrate, |
| 8 | a label laminate, |
| 100 | an item, |
| 101 | a labelled item |

The embodiments and examples recited in the claims and in the specification are mutually freely combinable unless otherwise explicitly stated.

In this specification, the term "comprising" may be used as an open term, but it also comprises the closed term "consisting of." Thus, unless otherwise indicated, the word "comprising" can be read as "comprising or consisting of".

For the purpose of the present description and the claims, unless otherwise indicated, all ranges include any combination of the maximum and minimum points disclosed, and include any intermediate ranges therein, which may or may not be specifically enumerated herein.

Percentage values relating to an amount of a material are percentages by dry weight (wt.%) unless otherwise indicated.

Term "web" refers to a continuous sheet of material. The web is generally processed by moving over rollers. Between processing stages, webs may be stored and/or transported as rolls.

Term "machine direction" (MD) refers to manufacturing direction of a web, i.e., running direction of the face or continuous label laminate during label manufacturing. In case of a rolled web, machine direction refers to a circumferential direction of the roll. Further, longitudinal direction of a web refers to the machine direction. MD may be equal to direction DIR1 of the label attached on the surface of an item.

Terms "cross direction" (CD) and "transverse direction" TD refer to a direction that is transversal to the machine direction. Thus, "transverse direction" TD and "cross direction" CD refer to the direction perpendicular to the running direction of the face or label laminate. CD may be equal to direction DIR2 of the label attached on the surface of an item.

Term "gsm" refers to $g/m^2$.

Term "HDPE" refers to high density polyethylene. HDPE preferably has a density from 0.93 to 0.97 $g/cm^3$.

Term "PP" refers to polypropylene. PP preferably has a density from 0.90 to 0.93 $g/cm^3$.

Term "polyolefin bottle" refers to a polyolefin bottle, i.e., a bottle made of polyolefin(s).

Term "PET" refers to polyethylene terephthalate, and "PET bottle" refers to a polyethylene terephthalate bottle.

In this specification term "label" refers to a piece of material, which is used for labelling of an item. Label may be used to identify something. Label may be attached to an article. An article may be a package, such as a bottle. In other words, label is suitable to be applied to a surface of an item to provide decoration, and/or to display information about the product being sold, such as content information, a trade name, a logo, a barcode, or any other graphics.

Preferably, the label according to this specification is a wash-off label, also referred to as a washable label. The term "wash-off label" refers to a label removable (detachable) from the surface of the item attached during subsequent washing process.

For filmic labels, at washing conditions having a temperature of 65-75°C, the adhesive bond between the label and the item the label is adhered to is weakened. The chemical effect of the washing solution may further promote the weakening of the adhesion.

For paper labels, the adhesive bond between the label and the item the label is adhered to is weakened at washing conditions having a temperature of 40°C in water.

Thus, the label can comprise an adhesive layer sensitive to washing conditions. The labels can be used in labelling of beverage bottles. The label according to this specification can be suitable for polyethylene terephthalate (PET) bottles. The label according to this specification can be suitable for polyolefin bottles, such as HDPE and PP bottles.

Term "face" refers to a substrate of the label, also called as a face stock or a face material.

In this specification, the term "adhesive coating" refers to a coating comprising an acrylic adhesive.

Term "PSA" refers to pressure sensitive adhesive(s). PSA according to this specification is an acrylic pressure sensitive adhesive.

Term "PEG" refers to polyethylene glycol(s).

A ratio of total film thickness before and after stretching (orientation) is called a "stretch ratio" or "stretching ratio". It may also be referred to as an orientation ratio. Stretch ratio is a non-oriented (undrawn) film thickness in relation to the oriented (drawn) film thickness. The non-oriented film thickness is the thickness after extrusion and subsequent chilling of the film. When stretching the film, the thickness of the film may diminish in the same ratio as the film stretches or elongates. For example, a film having thickness of 100 micrometers before uniaxial orientation is stretched by a stretch ratio of 5. After the uniaxial orientation, the film may have a fivefold diminished thickness of 20 micrometers. Thus, the stretch ratio (orientation ratio) is 5.

Term "shrinkable" refers to a property of a plastic film to shrink under exposure to external energy. A shrinkable film may shrink when exposure to an elevated temperature. Heat may be applied via washing liquid. In response to application of heat, the heat shrinkable film is arranged to shrink.

Shrinkage can be measured according to the following method: providing a sample with measured and marked 100 mm*100 mm area, placing the sample for 5 minutes to the caustic washing liquids having temperatures at intervals of 5°C from 55 °C to 95 °C, cooling the sample at water bath having temperature of around room temperature, drying the sample, and measuring the dimensions of the marked area of the sample. Preferably at least 3 or more parallel samples are used. Shrinkage is determined as the relative change of dimensions.

Peel adhesion corresponds to a force required to detach a self-adhesive label. In peel adhesion test a label is applied to a standard test plate under specific conditions and removed from the plate at a specified angle and speed according to FINAT Test Method no. 1: 180 deg. at 300 mm/min (FINAT Technical Handbook 8th edition, 2009).

Polymer gel content can be measured by using Dionex ASE 150 Solvent Extractor according to the following method:

Dionex ASE 150 Solvent Extractor has the following settings: Temperature - 100°C, Static Time - 30 min, Rinse Volume - 10%, Purge time - 60 seconds, Cell volume - 66 mL.
Equipment: 66 mL cell, 80 mm x 25 mm cellulose thimble, and acetone.

The method has the following steps:

1) Weight dry thimble
2) Add ~1-1.5 g wet adhesive to thimble by coating the inside in a thin film
3) Dry in oven until no moisture left
4) Weigh thimble + dry adhesive and insert into the 66 mL cell
5) Run through extractor process
6) Remove thimble and dry in the oven until all the acetone is gone
7) Repeat steps 5 and 6 two more times for a total of 3 cycles
8) Dry the thimble one final time and measure weight
9) With the values from steps 1, 4 and 8, calculate polymer gel content percent as follows:

$$\text{Polymer gel content} = 100 * (T_{AB} - T)/(T_{AA} - T)$$

in which

Thimble dry weight = T
Thimble + adhesive before extraction dry weight = $T_{AB}$
Thimble + adhesive after extraction dry weight = $T_{AA}$
Adhesive before extraction weight = $T_{AB} - T$
Adhesive after extraction weight = $T_{AA} - T$.

*LABEL*

As discussed, the label 2 is preferably a wash-off label. The wash-off label can also be referred to as a washable label, referring to a label removable (detachable) from the surface of the item attached to during subsequent washing process.

Thus, the label 2 can comprise a pressure sensitive adhesive layer 4 sensitive to washing conditions.

The label, if filmic, can be washable at a washing temperature of 65°C or 75°C, wherein washing liquid is from about 1% to about 4%, preferably from about 1% to about 2%, and most preferably about 1% alkaline water. The washing liquid can comprise caustic soda, for example sodium hydroxide.

The label, if a paper label, can be washable at a washing temperature of 40°C, wherein washing liquid is water. Preferably, the washing liquid for the paper label does not comprise an alkaline agent.

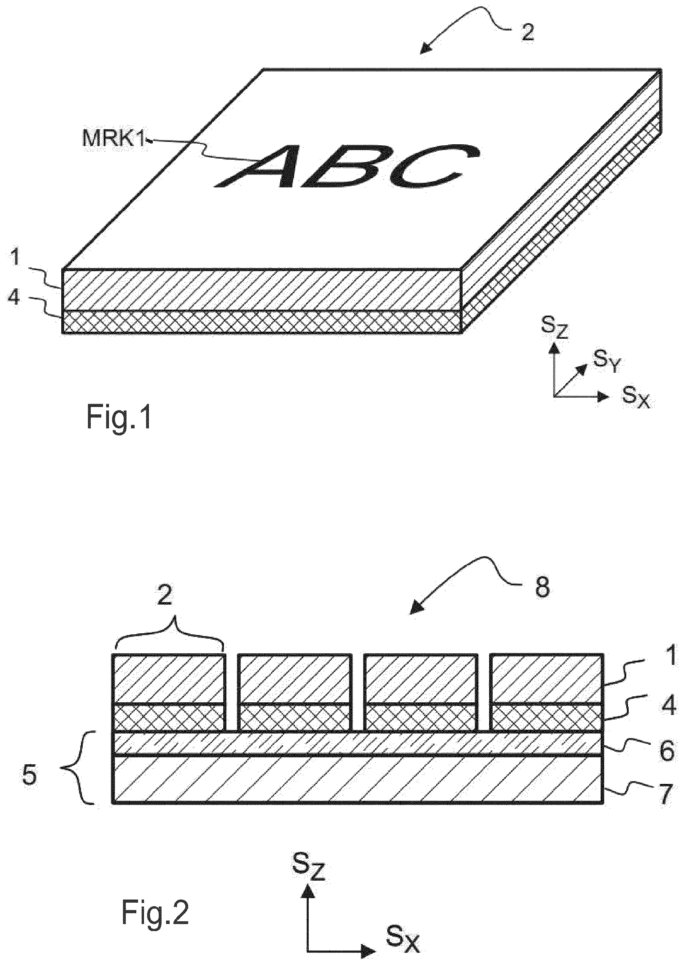

Referring to Figs 1-2, a label can comprise a face 1 and an adhesive layer 4 on the face 1 for adhering the label to the surface of an item to be labelled.

The label 2 can comprise or consist of the following layers:

- the face 1,
- the acrylic PSA layer 4, and
- optionally, a print layer MRK1.

Individual labels 2 can be die-cut from a continuous label web.

Referring to Fig. 2, the label 2 can be a label laminate comprising a release liner 5. The release liner can protect the adhesive layer before the label is adhered to a surface of an item.

Alternatively, and referring to Fig. 1, the label can be a linerless label without the release liner 5. Elimination of release liners reduces the material costs of the labels but also avoids the disposal of the release liner after the labelling. Moreover, the exclusion of the release liner decreases the thickness in a roll of labels and more labels can be provided per roll. Thus, the label can be a linerless label, such as a printed linerless label.

At least if the label is the linerless label without the release liner 5, there is preferably a release layer on top of the face for preventing adjacent layers of a linerless label roll for attaching to each other. The release layer is preferably a layer which does not cause problems for the washing process, such as a silicone based layer.

The label can comprise the following layers, preferably in the following order:

- optionally, a release layer comprising a release agent, such as a silicone,
- a face comprising an oriented thermoplastic film or a paper, and
- an adhesive layer comprising a wash-off additive and an acrylic pressure sensitive adhesive capable of forming a bond when pressure is applied at a room temperature.

The label can be a printed label. The printing MRK1 may be subsequently top coated or laminated in order to protect the printing. Alternatively or in addition to the top coating and/or laminating, the reverse side of the face adjacent to the adhesive layer 4 may be printed. Print layer is to be understood to include also decorations made by, for example, metallic or metallic like layers if such decorations are used in the label.

Thus, the label 2 comprises at least the face 1, at least one adhesive layer 4, and optionally a release liner 5. The adhesive layer 4 comprises PSA. The PSA is used to enable the label to be attached to an item, an article, or a container.

The label may further comprise one or more additional layers, such as a primer layer. The primer layer may be arranged in between the face and the adhesive layer. The primer layer may be arranged to increase the adherence of the adhesive layer to the face.

In an embodiment, density of the labels is adjusted to a total average density of less than 1.0 g/cm$^3$. This causes the labels to float in an aqueous solution. For example, in a case of PET bottles wherein recycling methods include crushing or shredding of plastic bottles, the bottle may sink while the label can float, thus allowing for efficient recovery and recycling of the PET flakes. Therefore, as pieces of shredded plastic bottles sinks, this can allow the labels to be separated from the bottles easily, particularly when using said total average density together with the adhesive allowing the PSA to separate from bottles efficiently.

*FACE*

The face 1 is adhered to the surface of an item during labelling through an adhesive layer 4. The face 1 comprises a first surface and a second surface. The first surface can refer to an adhesive side while the second surface can refer to a top side.

The face can be a filmic face, or the face can be a paper face.

The face can be suitable for printing by any of the known printing methods, preferably with gravure or flexographic process. Alternatively, the face can be, e.g., a direct thermal printable. Thus, the top side (i.e., the second surface of the paper label) can be printable e.g. by using heat.

Filmic face

The face can comprise a layer comprising a thermoplastic film. Thus, the face may comprise a face film. The face film may be a monolayer. Alternatively, the face film may have a multilayer structure including two or more layers.

The labels comprising a thermoplastic face, in contrast to the paper based, have e.g. a superior wet strength and transparency. Furthermore, thanks to the thermoplastic film, lifetime of the washing solution can be substantially prolonged.

The thermoplastic film may be provided through extrusion. Multilayer structure may be provided through coextrusion so as to provide uniform film structure, wherein the adjacent film layers are in direct contact with each other.

Thus, the face may comprise two or more layers of thermoplastic films. Preferably, for environmental reasons as well as for improving cost efficiency, the face has only one thermoplastic film or only two thermoplastic films.

The thermoplastic film(s) of the face is/are preferably oriented. The oriented film may be provided, for example, by uniaxial or biaxial stretching. Thanks to the oriented film(s), handling of the face may be easier than without the orientation. Furthermore, mechanical properties of the label can be improved, which can also affect to the washing of the label. Still further, due to the orientation, the film can exhibit controllable shrinkability at elevated temperatures. Elevated temperature can be applied in the form of heated washing liquid having, e.g., a temperature of 65°C.

For providing cost-efficient process with easily controllable film-structure, all thermoplastic layers of the face have preferably the same orientation if the face has a multilayer structure.

As discussed, the face can comprise a uniaxially oriented or biaxially oriented thermoplastic film. Uniaxially oriented film is preferably oriented in the machine direction. Machine direction orientation has effect on enabling sufficient mechanical properties required in dispensing lines of the labels, wherein the labels are separated from the supporting liner and applied onto the surface of an item.

Preferably, the face comprises the biaxially oriented thermoplastic film. The biaxial orientation and shrinkage of the film in two directions can have an effect on a removal profile of the label. When this film is brought up to the elevated temperatures during the washing, the film can shrink back towards the non-stretched state in both directions. This can improve efficiency of the washing process of the label and allow reducing the time of the label. Thus, biaxial orientation and shrinkage of the film may allow reducing the time of the label when compared to monoaxially oriented film.

The face may comprise a thermoplastic film having asymmetric orientation. Asymmetric orientation refers to the degree of orientation being different in the two orienting directions. Biaxial asymmetric orientation without annealing and/or with controlled thermal treatment may have effect on providing predetermined and non-uniform shrinkage capability for the face, which can further improve washability of the label.

The face may comprise a biaxially oriented thermoplastic film having asymmetric orientation. An asymmetric shrinkability of the biaxially oriented thermoplastic film has effect on performance of the label both in labelling phase and subsequent phase of label removal from the surface of the item labelled. Asymmetric orientation can have an effect on providing efficient removability of the label from the surface attached. Asymmetric shrinkability and a higher shrinkage in transverse direction can also have effect on enhancing the separation of the label attached to a cylindrical bottle shape having convex surface.

The thermoplastic film(s) of the face may exhibit at least 20% shrinkage at 65°C in the transverse direction. Alternatively or in addition, the thermoplastic film(s) of the face may exhibit at least 20% shrinkage at 65°C in the machine direction. In an embodiment, the thermoplastic film(s) of the face exhibits shrinkage of between 20 and 80% in the machine and/or cross direction(s) of the film, at 65°C. Said shrinkage of the thermoplastic film(s) of the face can have effect on capability of the label to be washed off from the surface labelled. Further, said shrinkage can have effect on enabling more efficient and quick removal of the label from the surface of the item attached during washing process. Shrinkage of the thermoplastic film applies stresses, such as contraction tension, on the adhesive bond between the adhesive layer and the surface of the item labelled thus enhancing or enabling the removal of the label from the surface labelled.

Below 55°C, preferably below 60°C, shrinkage of the thermoplastic film of the face can be less than 5%, preferably less than 2%, for example between 0 and 5%, or between 0.1 and 2%, in both directions (MD/CD). Low shrinkage at temperatures below 55°C, preferably below 60°C, can have effect on avoiding unwanted shrinkage of the labels during storage or during label converting steps, for example during printing. Further, if the shrinkable thermoplastic film has very low shrinkage below 55°C, preferably below 60°C, shrinkability level of the film can be remained at substantially same level until the washing process.

The thermoplastic film(s) of the face may be transparent or clear. From the optical point of view, high transparency of the labels can be preferred. For example, in applications where the objects beneath the label, i.e., the surface of a bottle, should be visible through the label. The haze of the film(s) may be lower than 25%, or lower than 10%, for example 2-6%, or 4-5%. Haze is tested according to standard ASTM D1003. When the haze of the label is low also the adhesives are preferably clear or transparent.

Alternatively, one or more of the thermoplastic film(s) of the face may be, for example, opaque and/or white. In this embodiment, the face can comprise additive, such as a pigment, to provide a desired color. In a multilayer film structure, the wash-off additive may be included in one or more of the layers.

As discussed, the film(s) of the face comprise(s) thermoplastic polymer(s). The thermoplastic film(s) can comprise, for example, at least one of polyethylene terephthalate PET, polyvinyl chloride PVC, polystyrene PS, polypropylene PP, polyethylene PE, polylactic acid PLA, and cyclic olefin copolymers COC.

Polystyrene (PS) is a synthetic aromatic polymer made from the monomer styrene. Polystyrene is a thermoplastic polymer having a glass transition temperature of about 100°C. It is in a solid state at room temperature but flows if heated above the glass transition temperature. It becomes rigid again when cooled. This temperature behavior is exploited for extrusion, and also for molding and vacuum forming, since it can be cast into molds with fine detail.

Examples of polymers derived from polystyrene include styrene blockcopolymers, such as SBS, SIS, SEBS, SEPS, SIBS, SEP, SEEPS and the like. One example discloses a coextrusion of GPPS/SBC copolymer layers with olefin elastomers or plastomers. The resultant film will have a density less than 1.0 g/cm$^3$.

Polylactide (PLA) has benefit due to its eco-friendly nature like development from renewable materials and biodegradability. Polylactide is a biodegradable, thermoplastic, aliphatic polyester derived from lactic acid obtained from renewable or non-renewable resources, e.g. corn-starch based lactic acid. Polylactide has initially partially crystalline structure containing both crystalline and amorphous regions. Polylactide may also be totally amorphous. It can be processed in similar manner than many thermoplastics into fibres, films or other products manufactured by conventional melt processing techniques. Due to the chiral nature of lactic acid and different cyclic diesters, lactide stereoisomers, several distinct forms of polylactide exists such as homopolymer of L- lactide PLLA and stereocopolymers of L- lactide and D-lactide P(L/D)LA or L-lactide and DL-lactide P(L/DL)LA.

Cyclic olefin copolymers are amorphous polymers based on different types of cyclic monomers. Cyclic olefin polymers and copolymers are produced by chain (co)polymerization of cyclic monomers. Such polymeric materials using a single type of monomer are named cyclic olefin polymers (COP).

Cyclic olefin polymers may be extruded with cast or blown film equipment. Cyclic olefin polymers may also be used as modifiers in monolayer or multilayer films to provide properties not delivered by base resins, such as polyethylene. Examples of advantageous COC properties include thermoformability, shrink, deadfold, easy tear, enhanced stiffness, heat resistance and higher moisture barrier. The optical properties, such as transparency, low birefringence, high Abbe number and high heat resistance, of cyclic olefin polymers are advantageous and in many ways similar to glass. Cyclic olefin polymers in general have a wide range of glass transition temperatures in a range of about 80-180°C. Examples of cyclic olefins include cyclobutenes, cyclopentenes, norbornenes, vinylcyclohexane and dicyclopentadiene.

The thermoplastic film(s) of the face may comprise a polyester film, such as a polyethylene terephthalate PET film. PET may be modified. The modified PET may be glycol modified PETG. In PETG the ethylene glycol unit(s) of the polymer backbone may be replaced, for example, with cyclohexane dimethanol CHDM and/or neopentyl glycol NPG. Thus, in an example, the thermoplastic film(s) of the face comprises glycol modified polyethylene terephthalate PETG.

The glycol modified polyethylene terephthalate PETG has technical effects. The glycol modified polyethylene terephthalate PETG can have effect on flexibility of the film. It can also have effect on ability of the film to be oriented. Still further the modification can have effect on reducing the brittleness of the thermoplastic film of the face. PETG can have effect on avoiding the stress whitening of the thermoplastic film, for example during application of the label. It can also have effect on transparency and clarity of the thermoplastic film.

In an advantageous embodiment, the thermoplastic film(s) of the face may comprise polypropylene and/or polyethylene film(s).

Polypropylene (PP) is a thermoplastic polymer having a glass transition temperature of about -20°C (atactic polypropylene) or about 0°C (isotactic polypropylene). Examples of suitable polypropylenes or polymers derived from polypropylene include PP-homopolymers, random PP copolymers, PP block copolymers, PP terpolymers, PP elastomers and PP plastomers.

Polyethylene (PE) is a thermoplastic polymer which may be classified into several different categories based on density and branching. Examples of such categories include ultra-high-molecular-weight polyethylene (UHMWPE), ultra-low-molecular-weight polyethylene (ULMWPE or PE-WAX), high-molecular-weight polyethylene (HMWPE), high-density polyethylene (HDPE), high-density cross-linked polyethylene (HDXLPE), cross-linked polyethylene (PEX or XLPE), medium-density polyethylene (MDPE), linear low-density polyethylene (LLDPE), low-density polyethylene (LDPE), very-low-density polyethylene (VLDPE) and chlorinated polyethylene (CPE). The melting point and glass transition temperature may vary depending on the type of polyethylene. For medium- and high-density polyethylene the melting point is typically in the range of 120-180°C, and for average low-density polyethylene in the range of 105-115°C. The glass transition temperature of LDPE is about -125°C.

The face may comprise, for example, an oriented polypropylene film, which can be a biaxially oriented film, and/or an oriented polyethylene film, which can be a biaxially oriented film. Said polyolefin films can improve easiness of handling of the film. Further, polypropylene can be less stiff than, for example, polyester. This reduced stiffness can result in reduced flagging or winging on curved bottles. Some containers can require such flexibility. Furthermore, biaxially oriented polypropylene and polyethylene films can have a density of less than 1.0 g/cm$^3$, causing the film to float in processes. Thus, in wash processes, PET bottle flakes can sink while the label comprising e.g. oriented polypropylene film can float.

Paper face

The face 1 can comprise or be made of a paper. The labels comprising a paper-based face 1 are typically environmentally friendlier material for labeling articles, such as e.g. bottles, than thermoplastic labels.

The paper can be calendered with a calender or a supercalender to obtain a high-density surface.

Preferably, for environmental reasons as well as for improving cost efficiency, the face 1 has only one layer of paper. Thus, the face 1 can comprise or consist of environmentally friendly materials. Thus, the paper label can be better for the environment than some other kind of face materials.

The face 1 can comprise a paper comprising natural fibres as its main raw material. Natural fibres refer to any plant material that contains cellulose. The natural fibres are preferably wood based natural fibers.

The wood based natural fibre may be from softwood trees, such as spruce, pine, fir, larch, douglas-fir, or hemlock, and/or from hardwood trees, such as birch, aspen, poplar, alder, eucalyptus, or acacia, or from a mixture of softwoods and hardwoods.

The face 1 can comprise cellulose fibers from both hardwood and softwood. Technical effect of the mixture of hardwood and softwood is to improve the internal bond strength of the face 1. This can be particularly advantageous for the paper label, at least if it is used as a direct thermal paper label.

The paper of the paper label is preferably so-called wood-free paper. Wood-free refers to chemical pulp, such as Kraft pulp. In accordance with an embodiment, a pulp used for making the face does not contain any kind of mechanical pulp due to high quality requirements of the face. Thus, the face 1 can be a wood-free paper comprising fibers, e.g., from softwoods and/or hardwoods.

The paper can have a fiber content of equal to or more than 50 wt.%, preferably at least 60 wt.%, and more preferably at least 70 wt.% in order to improve strength of the paper label. Further, increased content of natural fibres can decrease dusting of the paper label, if the paper is cut e.g. in on-demand printers.

The face 1 can further comprise, for example, at least one filler, such as a mineral filler. The at least one filler can be selected from a group consisting of clay, calcined clay, kaolin, natural ground calcium carbonate, precipitated calcium carbonate, talc, calcium sulphate, and titanium dioxide. A total amount of the fillers in the face 1 is preferably less than 10 weight-%, more preferably less than 5 weight-%, and most preferably less than 3 weight-%, for example between 0.5 and 5 wt.-%, or between 0 wt.-% and 3 wt.-%, based on the total dry weight of the face 1. The fillers can decrease costs of the manufactured product. Further, as the fillers can decrease wet strength properties of the face, the fillers can improve recyclability of a paper label.

The mineral fillers can also decrease strength properties of the face 1. If the face 1 comprises too much mineral fillers, some properties of the face 1 can be compromised. Thus, in an example, the face 1 does not comprise mineral fillers.

The face 1 can comprise a paper which is coated with one or more coatings. For coated papers, a total coat weight in the range of 1 to 12 g/m$^2$ per side (on one or both sides) can be used. The coating layer(s) can comprise at least one pigment selected from a group consisting of clay, calcined clay, kaolin, natural ground calcium carbonate, precipitated calcium carbonate, talc, calcium sulphate, and titanium dioxide. Further, said coating layer(s) can comprise binders. For environmental reasons and for improving properties of paper labels, the binders can comprise or consists of starch and/or polyvinyl alcohol.

A face 1 comprising the paper can be calendered with a calender, for example with a supercalender, to obtain a high-density surface.

A grammage of the face 1 is preferably at least 50 g/m$^2$, more preferably at least 60 g/m$^2$. Further, the grammage of the face 1 is preferably less than 85 g/m$^2$, more preferably equal to or less than 80 g/m$^2$. Grammage can be, for example, in a range between 50 g/m$^2$ and 82 g/m$^2$ or in a range between 70 and 80 g/m$^2$. Said grammage can be particularly suitable for paper labels used for on demand printers and afterwards for washing processes. The grammage can be measured according to standard ISO536.

The face 1 can have a caliper in a range between 50 $\mu$m and 95 $\mu$m, preferably in a range between 55 $\mu$m and 90 $\mu$m, and more preferably in a range between 60 $\mu$m and 85 $\mu$m, measured according to ISO534. If the face it is too thin, the paper label can be difficult to handle. For example, if the face is very thin, a stiffness of the paper label can go too low causing the paper label to be too sloppy. Thus, the paper label can be difficult to manufacture and/or the paper label can cause problems when used in labelling processes. However, thinner face can be easier and faster to wash off from an article, enabling efficient recycling process for bottles.

For improving printability and/or for providing desired look, the top side of the paper label can have a smoothness at least in a range between 350 sec and 550 sec (Beck), measured according to standard ISO5627. For example, a silicon layer on top of the face will smooth the paper label. Thus, in an embodiment, the top side of the paper label can have a smoothness of equal to or more than 1000 sec (Beck), measured according to standard ISO5627.

The paper label can have a brightness higher than 85% (R457) when measured according to standard ISO2469.

Therefore, the paper label can look nice. Further, high brightness can create a contrast between the symbols/letters. Thus, if the letters comprise some machine-readable letters, the letters can be easily read thanks to said brightness. This can be particularly advantageous when using the paper labels for recyclable bottles.

The paper label can have an opacity higher than 80%, such as in a range between 80 and 90, when measured according to standard ISO2471. Thanks to said opacity, the surface of the paper label cannot be too transparent for a machine to read. This can be particularly advantageous when using the paper labels for recyclable bottles.

The face 1 and/or the paper label can have a tensile strength in the machine direction higher than 40 N/15mm, preferably higher than 45 N/15 mm, when measured according to standard ISO1924/2. Technical effect is to improve dimensional stability of the paper label. The improved dimensional stability has a positive effect on manufacturing process and printing process as well as on some washing processes.

The face 1 and/or the paper label can have a tensile strength in the cross direction higher than 10 N/15mm, when measured according to standard ISO1924/2. Technical effect is to improve dimensional stability of the paper label. The improved dimensional stability has a positive effect on manufacturing process and printing process as well as on some washing processes.

In an advantageous embodiment, the paper label is attached to a bottle, and the label and the labelled bottle have such densities wherein one has a density of more than water and the other has a density of less than water. Technical effect is to improve recyclability of the paper label.

In an embodiment, density of the paper label is adjusted to a total average density of more than 1.0 g/cm$^3$. Technical effect is to provide a label that sinks during the washing process. For example, in a case of PP and HDPE bottles wherein recycling methods include crushing or shredding of plastic bottles, pieces of bottles float in water while the paper labels sink, thus allowing for efficient recovery and recycling of the PP and HDPE flakes. Therefore, as pieces of shredded plastic bottles floats, this can allow the labels to be separated from the bottles easily, particularly when using said total average density together with the wash-off adhesive allowing the PSA to separate from bottles efficiently at 40°C in water. Further technical effect is to provide particularly environmentally friendly product, wherein plastics and cellulosic fibers can be collected separately.

Paper labels can be recycled either in a fiber loss system, wherein the paper is fully broken into small pieces, or in a non-fiber loss system, wherein the paper does not break in wet conditions. Preferably, the paper label breaks fully into washing water.

The paper can be handled with washing water. The paper can be recycled, for example, in a system comprising a cyclone cleaning device. The cyclone cleaning device can be used to remove the paper label from the system.

Thus, the paper label can be particularly environmentally friendly wash-off label.

DIRECT THERMAL LABEL

The label according to this specification may be a direct thermal label, such as a direct thermal linerless paper label. Technical effect of this embodiment is to provide label that is thermally printable while improving washability of the label.

The face 1 of the direct thermal paper label has at least two layers. The face 1 can comprise or consist of

- a paper,
- a direct thermal coating layer,
- optionally, an intermediate layer left in between the direct thermal coating layer and the paper, and
- preferably, a top coating on the direct thermal coating layer.

Thus, the label can be a direct thermal paper label, such as a direct thermal linerless paper label, comprising or consisting of

- the face 1 comprising

    - a paper,
    - direct thermal printable coating,
    - optionally, a top coating on the direct thermal printable coating, and
    - optionally, an intermediate layer disposed between the base layer and the direct thermal printable coating,

- optionally, a release coating on the face 1, and
- pressure sensitive adhesive coating.

If the label 2 is the direct thermal label, the face 1 can have a static sensitivity below 100 degrees C, preferably in a range between 75°C and 95°C. The static sensitivity, as well as dynamic sensitivity, needs to be low enough so that the product is not darkening before printing, for example during transportation. However, the static and dynamic sensitivities should be high enough so that the label is thermally printable.

As discussed, the face 1 may further comprise a top coating on the direct thermal printable coating. The top coating preferably has a grammage in a range between 0.5 $g/m^2$ and 3 $g/m^2$. The top coating may protect the top surface and/or print of the face 1 against rubbing or other external stress.

The top coating, if used, may comprise at least one of: starch, polyvinyl alcohol (PVA), latex, and wax. Preferably, the top coating comprises polyvinyl alcohol (PVA) and/or wax. These coatings may provide improved protection for the direct thermal printable coating. Furthermore, wax may improve friction properties of the paper label. The top coating may further help to decrease dusting of the paper label during a usage of the paper label.

The direct thermal printable coating can be arranged to provide thermal printability for the face 1. The direct thermal printable coating is arranged to form a thermal sensitive, reactive layer changing color during the thermal printing. The thermal coating can comprise reactive components. The thermal coating may comprise a matrix. The matrix may comprise a dye and a developer.

Preferably, in order to improve printing quality cost efficiently, the direct thermal printable coating has a grammage in a range between 1 $g/m^2$ and 5 $g/m^2$.

Typically, the thermal coating matrix in a solid state is heated by a thermal print head above its activation point and/or melting point. The dye of the thermal coating may comprise a leuco type dye. The leuco type dye is arranged to react with an acid and change into a colored form.

Thermal coating may comprise

- a dye,
- a developer,
- a sensitizer,
- a binder, and
- a stabilizer.

The developer can be arranged to co-react with the dye above activation temperature during thermal printing. Reaction of the dye with the developer is arranged to trigger color formation. Developer may comprise sulfonyl ureas, zinc salts of substituted salicylic acids or phenols, for example Bisphenol S (BPS). The thermal coating may preferably be BPA free, Bisphenol (BP) free and/or Phenol free for increased chemical safety.

Sensitizer may be used in a thermal coating to decrease melting point of a dye and/or a developer. Dye and developer are arranged to react when heated above melting point of matrix of the thermal coating. The melting point of the matrix may depend on melting point values of its components. Thermal threshold of the thermal coating is melting point of the component of the thermal coating having the lowest melting point. Sensitizer of the thermal coating may be arranged to decrease melting point of dye and/or developer. This has effect of proving accuracy to the melting point and/or optimizing temperature of color change and/or facilitating mixing of dye and developer.

Optionally, the thermal coating may comprise stabilizers. Dyes in thermally sensitive paper may be unstable tending to return to their original colorless crystalline form. The thermal paper may be sensitive, for example, to hot and humid external conditions. In order to stabilize the metastable glass formed by leuco dye, developer and sensitizer, a stabilizer may be added to the mixture. Stabilizers may affect inhibiting recrystallization of the dye and developer and/or stabilizing the print.

Binder of the thermal coating may have an effect of facilitating the thermal coating to adhere to a base substrate or to a pre-coat. Binder may comprise double bonds. The binder may comprise polyvinyl alcohol (PVA) or latex, for example a styrene butadiene latex (SB) or a styrene acrylic (SA).

Sensitivity of the thermal coating refers to the degree to which it reacts to a given amount of heat or energy. Sensitivity is a decisive factor in the selection of the right thermal coating or thermal paper. It may be depicted in graphs plotting a curve of image density or optical density (OD) against the amount of heat or energy transferred. Optical density is a measure of a relationship between incident and reflected light. An optical density of approximately 1.1 is usually a full black to the human eye. Lower optical densities thus correspond to varying shades of grey. Thermal coatings and thermal papers are typically characterized by using static and dynamic sensitivity.

Static sensitivity indicates the temperature at which a thermal paper will begin imaging, i.e., changing color. Thermal papers with low static sensitivity only begin imaging at high temperatures, for example at above 90°C. Thermal papers with medium static sensitivity on the other hand begin imaging at lower temperatures, for example at between 80°C and 90°C. High static sensitivity thermal papers start to react even at lower temperatures, for example at 65-80°C, or at 70-80°C.

Thus, if the label is the direct thermal wash-off label, the face 1 preferably has a static sensitivity below 100°C, more preferably in a range between 75°C and 95°C.

*RELEASE COATING LAYER ON THE FACE*

The label 2 can comprise a release coating layer on top of the face 1, i.e., on the second surface of the face 1. The release coating layer on top of the face is an optional layer, particularly advantageous for linerless labels.

If the label 2 is the direct thermal label, the release coating layer can be on top of the direct thermal coating. Thermal printing of the label can be made through the release coating layer.

In an embodiment, the label 2 is a linerless label. Thus, the label 2 with pressure sensitive adhesive on its one side (bottom side) and release coating layer on its other side (top side) can be self-wound around itself without tendency of blocking the adjacent layers of the label web to each other. Thanks to the release coating layer on top of the face, the adhesion may be low enough so that the adhesive layer can be readily released from the face 1 material upon unwinding the linerless label roll.

The release coating layer may be a silicone-based or non-silicone-based release coating layer. Preferably, the release coating layer comprises or consists of silicone-based release coating.

Non-thermally curable release coatings, such as UV curable silicone, are preferable, at least when the label is the direct thermal label. Technical effect is that curing of such layers is not heating the thermally sensitive material of the direct thermal label. Thus, the release coating may be UV curable silicon having the benefit of being curable on top of thermal face 1 without heat.

In some embodiments, further technical effect of the release coating layer on top of the face is to lower friction against a print head of a printer and minimize wear of the print head. Furthermore, due to the lowered friction and minimized wear of the print head, a printing quality of the label can be improved.

Further, surprisingly, the silicone based release coating did not cause problems to the washing process during experimental tests.

*ADHESIVE COMPOSITION*

Adhesive provides adhesion, i.e., adheres or bonds the label to the surface of an item. The adhesive layer of the label should have a property of adhering i.e. tack (stickiness) in order to stick to an item during labelling process. Tack is the property of adhesive that allows the immediate formation of a bond on contact with another surface. The tackiness is needed at the point the label is attached to an item. The optimum adhesion between two materials depends on, for example, the wetting and surface energy of the materials. For the adhesive to wet the surface, the surface tension of the adhesive must be lower than or equal to the surface tension of the article to be labelled. If the surface tension of the adhesive is lower than the surface tension of the article it leads to good wetting and increased adhesion. Inherently low surface energy materials, such as polyethylene and polypropylene, may be difficult to bond without special surface preparation. Their surface energy level may be from 30 to 32 dynes/cm.

Acrylic emulsion adhesives are acrylic polymers and copolymers which are polymerized in water. Theses aqueous adhesives are coated onto the substrate and the water is subsequently evaporated off by passing the coated substrate through a drying tunnel.

The label comprises a modified adhesive composition comprising an acrylic adhesive and a wash-off additive.

The wash-off additive added into the acrylic adhesive can be in a form of an aqueous dispersion. The acrylic adhesive composition comprising the wash-off additive may be prepared by blending an acrylic adhesive and the wash-off additive.

An amount of the wash-off additive is at least 4 wt.%, calculated from total dry weight of the acrylic adhesive. For improving efficiency of the additive, an amount of the wash-off additive can be at least 5 wt.%, preferably at least 10 wt.%, more preferably at least 12 wt.%, and most preferably at least 15 w. The effect of the wash-off additive on the washability of the label can improve as the amount of the wash-off additive increases, at least up to 20 wt.%.

The acrylic adhesive can be the most efficient when the amount of the wash-off additive does not exceed 25 wt.%. Thus, an amount of the wash-off additive may be equal to or less than 25 wt.%, preferably equal to or less than 20 wt.%, and most preferably equal to or less 18 wt.%, calculated from total dry weight of the adhesive. In an advantageous example, the amount of the wash-off additive is from 10 wt.% to 20 wt.%, calculated from total dry weight of the adhesive.

Thanks to the wash-off additive in the acrylic adhesive, washability of the PSA can be substantially improved.

As discussed, the adhesive according to this specification is an acrylic adhesive. Acrylics are a type of synthetic polymer which fall into the thermoplastic resin family. Technical effects include providing strong, durable adhesion at normal temperatures and conditions. Acrylic adhesives are based on acrylic polymers, also called acrylate polymers. Acrylate monomers, used to form acrylate polymers, are based on the structure of acrylic acid, which comprises a vinyl group and a carboxylic acid terminus. Acrylic polymers are characteristically tacky, and they can be used as pressure sensitive adhesives without any modification. Further technical effects include good aging and UV-resistance properties. They are polar in nature and therefore give good adhesion to polar substrates.

The acrylic adhesive can be in a form of an aqueous dispersion of acrylates having a solids content in a range between 40% and 60%, preferably in a range between 50% and 60%. Technical effect of said solids content is to provide an easier drying process. Another technical effect is that due to the higher solids content, less energy is needed for the drying process. Thus, the higher solids content is environmentally friendly solution. Further technical effect is to decrease costs, such as conversion costs and shipping costs.

Preferably, the acrylic adhesive coating comprises

- butyl acrylate, or
- 2-ethylhexyl acrylate, or
- butyl acrylate and 2-ethylhexyl acrylate.

Total content of the butyl acrylate and 2-hydroxyethyl acrylate may be at least 50 wt.%, more preferably at least 70 wt.%, more preferably at least 80 wt.%, and most preferably at least 85 wt.%, calculated from the dry weight of the acrylic adhesive. These acrylic adhesives may be particularly advantageous for labels.

The acrylic adhesive coating can comprise

- a rosin acid, and/or
- a copolymer of vinyl acetate and ethylene (VAE).

The rosin acid is an organic acid known by a person skilled in the art.

The copolymer of vinyl acetate and ethylene (VAE) is a vinyl acetate ethylene copolymer known by a person skilled in the art. Technical effect is to provide improved performance for the PSA, such as an improved tack and adhesion properties for the acrylic adhesive.

In an embodiment, the acrylic adhesive comprises at least 80 wt.% (by dry weight) 2-ethylhexyl acrylate, calculated from the dry weight of the acrylic adhesive. This kind of the adhesive may be particularly useful for adhesives. Further, the acrylate dispersion may not have strong effect on color of the layer, hence, visual appearance can be easily controlled.

The acrylic adhesive may further comprise one or more than one crosslinker. The one or more than one crosslinker can be selected from a group consisting of: allyl methacrylate (AMA), ethylene glycol dimethacrylate (eGDMA), triethyleneglycol dimethacrylate (TRGDMA), polyethyleneglycol 200 dimethacrylate (PeG200DMA), 1,3-butanediol dimethacrylate (1,3-BDDMA), 1,4-butanediol dimethacrylate (1,4-BDDMA), 1,6-hexanediol dimethacrylate (1,6-HDDMA), glycerol dimethacrylate (GDMA), trimethylolpropane trimethacrylate (TMPTMA), and diurethane dimethacrylate (HEMATMDI).

Particle size (nm) of the acrylic adhesive composition, measured as a mean particle diameter, can be in a range from 100 nm to 800 nm, preferably from 120 nm to 500 nm, more preferably from 140 nm to 400 nm, and most preferably from 150 nm to 300 nm. Particle size can affect to a behavior of the acrylic adhesive composition. With said range of 100 to 800 nm, and particularly with the most desired range from 150 nm to 300 nm, properties of the acrylic adhesive, such as solid content and viscosity levels, can be easily adjusted to a desired level.

Polymer gel content of the acrylic adhesive composition can be used for determining crosslinking level of the adhesive. Polymer gel content of the acrylic adhesive composition can be at least 10%, such as in a range from 20% to 90%, preferably from 45% to 85%, more preferably from 55% to 80% and most preferably from 60% to 75%, or from 65% to 75%. Thanks to said polymer gel contents, and particularly the preferred ranges, adhesion performance can be controlled to an improved level. Too high gel content can decrease adhesion performance, while too low gel content can increase adhesion performance too much.

In an advantageous embodiment, the adhesive further comprises from 0.1 to 0.5 wt.% (by dry weight), preferably from 0.2 to 0.4 wt.% (by dry weight) nonionic biodegradable surfactant. The addition of nonionic biodegradable surfactant can be environmentally friendly way to improve washability when used together with the wash-off additive.

In order to improve washability of the acrylic adhesive, the acrylic adhesive according to this specification comprises a wash-off additive comprising a grafted rosin ester. The wash-off additive can comprise an aqueous phase and resin particles dispersed in the aqueous phase.

The resin particles of the wash-off additive can comprise resinous material, which can be selected from a group consisting of a hydrocarbon resin, an alkyd resin, a polyamide resin, a rosin resin, and mixtures thereof. Preferably, the resinous material comprises or is the rosin resin. In an embodiment, an amount of the rosin resin is at least 50 wt.%, preferably at least 65 wt.%, such as at least 80 wt.%, and more preferably at least 90 wt.%, such as 100 wt.%, with respect to the resinous material. Said resinous material and particularly the rosin resin can improve performance of the additive.

An amount of the grafted rosin ester with respect to the resinous material in the wash-off additive may be at least 1 wt.%, for example, from about 1 wt.% to about 8 wt.%, preferably from about 2 wt.% to about 6 wt.%, such as from about 3 wt.% to about 5 wt.%. Thus, the effect of the wash-off additive in the acrylic adhesive can be improved.

The dispersion may further comprise e.g. an anionic emulsifier, preferably from 0.1 wt.% up to 3 wt.%.

The total amount of the resinous material, the grafted rosin ester, the optional anionic emulsifier, and water in the wash-off additive can be at least 95 wt.%, preferably at least 97 wt.%, such as at least 98 wt.%, and more preferably at least 99 wt.%, such as 100 wt.%, with respect to the total weight of the wash-off additive.

In an embodiment, resin particles of the wash-off additive have a mean particle diameter d50 of less than 1.2 microns, preferably less than 0.9 microns, wherein d50 means the mean particle diameter for the 50 wt.% fraction of the particles starting from the smallest particles.

Thus, as discussed, the wash-off additive can be an aqueous dispersion comprising the grafted rosin ester. The grafted rosin ester according to this specification is a rosin ester grafted with a capped polyalkylene glycol, wherein the capped polyalkylene glycol is a poly(alkylene glycol) alkyl ether.

The polyalkylene glycol can be selected from the group consisting of C2-C5 polyalkylene glycols and mixtures thereof. In an advantageous embodiment, the polyalkylene glycol is or comprises polyethylene glycol. The polyethylene glycol can be particularly suitable for improving washability properties of the wash-off additive.

The alkyl ether can have 1 to 18 carbon atoms, preferably 1 to 4 carbon atoms. Most preferably, for improving washability properties of the additive, the alkyl ether is a methyl ether.

Therefore, in an advantageous embodiment, the capped polyalkylene glycol is a methyl ether capped polyethylene glycol. This can particularly improve washability of the label comprising an acrylic adhesive in low temperature washing processes. Further, by using a wash off additive comprising the rosin ester grafted with a capped polyalkylene glycol, wherein the capped polyalkylene glycol is the methyl ether capped polyethylene glycol, the PSA can be firmly remained attached to the face.

Therefore, in an advantageous embodiment, the wash-off additive comprises a rosin ester grafted with a methyl ether capped polyethylene glycol. This kind of additive can substantially improve washability of labels.

The capped polyalkylene glycol may have a Mw in a range between 1000 and 10000, preferably from 1000 to 8000. The average molecular weight of the end-capped polyalkylene glycol can be determined, e.g., by hydroxyl number analysis.

The molar ratio between the rosin ester and the capped polyalkylene glycol can be 0.05:1 to 1:1, preferably from 0.2:1 to 1:1, more preferably from 0.4:1 to 1:1, and most preferably from 0.7:1 to 0.9:1. Said molar ratio can improve washability of the label.

Surprisingly, by using the wash-off additive comprising the grafted rosin ester in the acrylic adhesive, washability of the labels can be substantially improved. During experimental tests, this kind of effect was not seen with conventional rosin ester surfactant, nor with conventional polyalkylene glycols, such as polyethylene glycols.

The acrylic adhesive comprising a dispersion of acrylates and the wash-off additive can be extremely sensitive to washing conditions comprising a low temperature, e.g., from 40°C to 75°C. Further, the adhesion of the adhesive to the labelled item can decrease more than the adhesion to the face so that the adhesive can remain attached to the face.

The adhesive comprising the wash-off additive can be environmentally friendly solution, which can be used e.g. with food materials. Further, the acrylic water-based adhesive may have a longer open time than some other pressure sensitive adhesives, hence, the label comprising water-based acrylic PSA may be removed after some seconds or minutes, if needed.

*PRESSURE SENSITIVE ADHESIVE LAYER*

The label can be affixed to the surface of an item (article) 100 through an adhesive layer 4 so as to form a labelled item 101. The label can comprise an adhesive layer sensitive to washing conditions.

An adhesive sensitive to washing conditions refers to such adhesives, wherein the adhesion of the adhesive decreases at washing conditions. The washing conditions generally comprise water, optionally alkaline conditions, and increased temperature. The increased temperature can be e.g. from 40°C to 75°C.

The alkaline conditions refer to an aqueous solution containing alkaline agent, such as NaOH, KOH or combination thereof. Probably the most common alkaline agent is sodium hydroxide (NaOH), which is also called caustic soda. The alkaline conditions (i.e., the alkaline liquid) generally contains about 0.5-10% or 1-4% (by weight) of the alkaline agent(s), for example about 1-2%.

Preferably, filmic labels comprising the filmic face are washed at 65-75°C in alkaline conditions, while the paper labels comprising the paper face can be washed at 40°C by using water, without the alkaline agent.

The adhesive layer of the label should have a suitable adhesion i.e. tack (stickiness) in order to stick to an item during labelling process. Tack is the property of adhesive that allows the immediate formation of a bond on contact with another surface. The tackiness is needed at the point the label is attached to an item. The optimum adhesion between two materials depends on, for example, the wetting and surface energy of the materials.

The adhesive layer 4 may be a continuous coating covering 100% of the face surface (referring to the first surface of the face). Alternatively, the adhesive layer 4 may be applied discontinuously as spots or strips covering less than 100% of the first surface of the face. For example, the adhesive may cover between 10 to 90% of the total area of the first surface of the face. Reduced amount of adhesive may have effect on reducing the time needed for the subsequent removal of the label during washing process from the surface of the item attached. Thus, in an advantageous embodiment, the adhesive layer 4 covers less than 90%, more preferably less than 80% of the first surface of the face.

The adhesive coating may consist of one layer. Technical effect is that the coating process can be simplified.

Alternatively, the adhesive coating can have a multilayer structure including two or more layers, preferably 2 to 4 layers, such as 3 or 4 layers. Preferably, if the adhesive coating has the multilayer structure, at least two layers has adhesive compositions differing from each other. Technical effect of the multilayer structure is to control washability of the label during recycling, particularly anchorage and delamination properties of the label.

An adhesive layer may have a total thickness in the range of about 5-40 $\mu$m, or in the range of about 8-20 $\mu$m. For further improving efficiently of the washing, the total thickness of the adhesive layer can be in the range of about 5-15 $\mu$m or 5-12 $\mu$m.

The amount of the adhesive in the label, in dry weight, may be in the range of about 5-40 g/m$^2$, or 8-20 g/m$^2$. For improving efficiently of the washing, the amount of the adhesive can preferably be less than 20 gsm, such as equal or less than 15 g/m$^2$. In an advantageous embodiment, the total amount of the PSA in the label is between 5 and 20 g/m$^2$ or between 5 and 15 g/m$^2$.

The label comprises the acrylic pressure sensitive adhesive (PSA). Labels having a PSA layer can be adhered to most surfaces through an adhesive layer without the use of a secondary agent, such as a solvent, or heat to strengthen the bond.

Generally, the pressure sensitive adhesives can be divided into the following groups: water based (water-borne) PSA, solvent based PSA and solid PSA. Solid PSAs are melted during application to the surface to be coated and may also be referred to as a hot-melt PSAs.

As discussed, the adhesive (PSA) according to this specification is acrylic-based. Thanks to the acrylic-based adhesive, the adhesive can remain predominantly adhered to the face 1 during the washing process.

The water-based acrylic pressure sensitive wash-off adhesive can have many advantages over other kinds of PSAs. For example, tackiness of the product can be in an improved level thanks to the water-based acrylic adhesive. Further, the water-based acrylic adhesive can be environmentally friendly. Furthermore, the water based acrylic adhesive can be efficiently blended with the wash-off additive. Furthermore, wash-off label can be particularly environmentally friendly product.

The pressure sensitive adhesive according to this specification can exhibit reduction in its adhesion force in washing conditions, such as using aqueous alkaline conditions at a temperature of 65-75° for filmic labels, or aqueous conditions at a temperature of 40°C for paper labels.

*RELEASE LINER*

Referring to Fig. 2, the label 2 may comprise a release liner 5. The release liner 5 is an optional feature.

The release liner 5 has a substrate 7 onto which a release coating layer 6, such as silicone, is applied.

Term "release liner" refers to a structure comprising a backing material layer as a substrate and a release coating layer on a surface of the substrate. In other words, the backing material is usually coated with a thin layer of release agent, such as silicone. The substrate of the release liner may be a paper based or film based substrate. The release coating layer provides a non-adherent surface i.e. low adhesion and release effect against the adhesive layer. The release liner protects the adhesive layer during shipment and storage. It further allows for efficient handling of individual labels after the labels are die-cut and the surrounding matrix is stripped up to the point wherein the individual labels are dispensed on a labelling line.

In labelling, the release liner is removed and disposed of, and the label is attached onto the surface to be labelled through the adhesive layer. Thus, release liners of the label laminates serve one or more useful functions: they are used as a carrier sheet onto which the adhesive may be coated; they protect the adhesive layer during storage and transportation; they provide a support for labels during die-cutting and printing, and ultimately, they release from the adhesive leaving it undamaged.

The face 1 and the release liner are typically laminated together having an adhesive layer in between, which laminated structure is referred to as a label laminate.

If the label is a linerless label without the release liner, the label preferably has a release coating layer, such as a silicone layer, on top of the face 1 (i.e., on the second surface of the face).

Conventional silicone release coating systems consists of a reactive silicone compound, a cross-linker, a catalyst, and optionally an inhibitor. The silicone coating compositions may be solvent-based, emulsion-based or solventless (100% solid composition). Silicone content may be less than 2 g/m$^2$, less than 1.5 g/m$^2$ or less than 1 g/m$^2$ (dry grammage). The amount of silicone may be at least 0.01, at least 0.02 or at least 0.1 g/m$^2$. The amount of silicone may be between 0.4 and 1.5 g/m$^2$ or between 0.6 and 1 g/m$^2$, for example 1 g/m$^2$.

*ARTICLE*

One embodiment provides a combination of a label and an article. The article may be a package. In an advantageous embodiment, the article is a beverage bottle.

The labels may be in a form of a continuous label web having a plurality of individual labels wound into a roll. An automatic label dispensing machine can be configured to separate the individual labels from the label web and feed the labels onto a surface of a product to be labelled.

Labels may be used in wide variety of labelling applications and end-use areas, such as beverage labelling, food labelling, home, and personal care product labelling, and labelling of industrial products. The surface of the labelled article may be for example plastic, glass, metal, or paper based. The labelled article may be for example a container, such as a bottle, jar, canister, can, tin or the like. The label may also be applied to semi-rigid or flexible packages used for e.g. packaging of food.

An advantageous embodiment provides a use of a label for labelling of a beverage bottle. Examples of the beverage bottles include glass bottles, metal bottles, polyethylene terephthalate (PET) bottles, and bottles made of polyolefin, such as high density polyethylene (HDPE) and polypropylene (PP).

The label can surround the labelled article, such as the beverage bottle, completely or partially. The beverage bottle is preferably a polyolefin bottle, polyethylene terephthalate (PET) bottle, or a glass bottle, most preferably the beverage bottle is the polyolefin bottle or the polyethylene terephthalate (PET) bottle. The beverage bottle can be a plastic bottle exhibiting heat shrinkage during wash.

In an advantageous embodiment, the label according to this specification is attached to a surface of a polyethylene terephthalate bottle or a polyolefin bottle. For example, PET bottles are known to be thin bottles, which shrink at elevated temperature, and which will be crushed during the wash.

Preferably, the label is attached to a bottle, and the label and the labelled bottle have such densities wherein one has a density of more than water and the other has a density of less than water. Technical effect is to improve recyclability of the label.

*LABEL REMOVAL IN RECYCLING PROCESS*

Removing the adhesive label can be implemented by washing said label off from the surface of an item it has been adhered to. The item can be a beverage bottle. The beverage bottle can be a plastic bottle exhibiting heat shrinkage during wash.

Labelled bottles are generally reused or recycled several times. Thus, there is a need for an improved label and face structures for an efficient and cost-effective recycling process of the labelled items.

Labels designed to be used for such purpose are called wash-off labels. The wash-off labels are one class of labels having specific properties. The wash-off labels differ, for example, from repositionable labels, removable labels, and resealable labels.

Because polymeric labels (i.e., filmic labels) do not possess the water permeability of the paper labels, the polymeric labels may be more challenging to remove completely with the existing washing process. Thus, washing conditions of polymeric labels and paper labels can differ as discussed in the specification.

In the washing process the label is detached from the labelled item, for example from the surface of the bottle. During washing process, the label is exposed to a heated washing liquid. The adhesive layer can lose its adhesion to at least some extent under the influence of washing conditions enabling and/or enhancing removal of the label from the surface of the item labelled.

In an example, the adhesive layer may not dissolve in the washing liquid. On the contrary, the adhesive layer may be adhered to the face after removal of the label from the surface of an item. Technical effect is that lifetime of the washing solution can be prolonged.

As discussed, the label may comprise a shrinkable thermoplastic film. Technical effect is that a shrinkable thermoplastic film is able to provide shrink force weakening the adhesion force of the adhesive layer thus detaching the adhesive label from the surface of the item attached in a washing process comprising heated aqueous washing solution.

Conventional washing conditions of recyclable containers, such as glass containers, can comprise temperatures above 77°C in aqueous solution. For polyester or plastic containers, conventional washing temperature has been even about 80 °C.

As discussed, the paper label can have an improved washability already at 40°C, in water, and the filmic label can have an improved washability already at 65°C. Thus, thanks to the label according to this specification, washability of labels can be improved so that washing of labels can show superior results compared to conventional wash-off labels.

A peel adhesion can be expressed as a peel value at an angle of 180°, determined according to this specification. In an embodiment, the peel adhesion may be up to 25 N/25 mm, determined at 23°C.

At washing conditions, the peel adhesion can be 2-100 or 5-50 times less, for example 1-5 cN/25 mm, or 0-5 cN/25 mm, and most preferably less than 2.5 cN/25 mm, determined according to this specification.

*EXPERIMENTAL TESTS*

The washability can be measured by determining anchorage and delamination levels.

For example, anchorage level of 100% and delamination level of 0% means no delamination from the bottle and 100% anchorage on the face, i.e., a failed test.

Further, anchorage level of 0% and delamination level of 100% means a delamination from the bottle and no anchorage on the face.

Furthermore, for example anchorage level of 0% and delamination level of 11% means 11% delamination level from the bottle, wherein (from the percent that did delaminate) there was no anchorage of the face. Thus, with 11% delamination, 89% of the flakes did not change at all, and 11% of the flakes did delaminate and that adhesive ended up in solution.

*Example 1: Washability*

During the experimental test, washability of filmic labels having corona treatment was tested.

The labels were attached to cylindrical PET bottles having a thickness of 0.6 mm. For the washability tests, the bottles were crushed into 25 g flakes each having a size of 1 cm x 1 cm.

According to these test results, the labels were washable at a temperature of 75 °C when amount of wash-off additive was more than 5 wt. %, and the washability improved when amount of the wash-off additive was 10 wt.% or more.

By using a temperature of 65 °C, the labels were washable when the amount of the wash-off additive was at least 10 wt.%, and the washability improved when amount of the wash-off additive was 15 wt.% or more.

The best washability results were obtained when the amount of the wash-off additive was in a range between 15 and 20 wt.%.

Table 1. Test conditions and results

| Amount of wash-off additive (%) | 0 | 0 | 4 | 4 | 5 | 5 | 10 | 10 | 15 | 15 | 20 | 20 |
|---|---|---|---|---|---|---|---|---|---|---|---|---|
| Temperature (°C) | 75 | 65 | 75 | 65 | 75 | 65 | 75 | 65 | 75 | 65 | 75 | 65 |
| Anch. (%) | 100 | 100 | 33 | 100 | 0 | 100 | 0 | 0 | 0 | 0 | 0 | 0 |
| Delam. (%) | 0 | 0 | 5 | 0 | 48 | 0 | 84 | 15 | 100 | 92 | 100 | 99 |

*Example 2: Bottle comparison*

Washability of different kind of bottles was tested as follows:

Test point 1: Cylindrical PET bottle having a thickness of 0.6 mm.
Test point 2: PET bottle having square profile with rounded corners and a thickness of 0.4 mm.
Test point 3: Cylindrical PET bottle having a thickness of 0.5 mm.
Test point 4: Milk jug: polyolefin bottle (HDPE), opaque and flimsy compared to PET bottles.

The washability tests were repeated with the plastic bottles of the test points 1 to 4 by using 24-hour dwell time on bottles. The washing conditions were 1% NaOH at 65°C and 75°C.

The face material for all test points was BOPP, and an amount of the PSA was 15 to 20 gsm.

All tested bottles were crushed into 25 g flakes (approximately 1cm × 1cm) and added into 100 g washing solution. Mixing was performed by using 15 min mixing time.

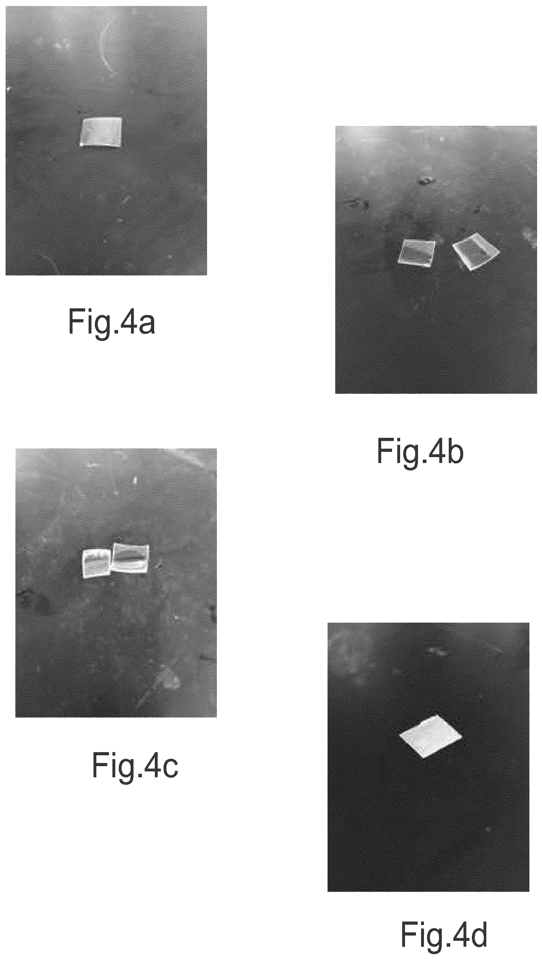

Fig. 4a shows a bottle curl at 65°C for the bottles according to the test point 1. Fig. 4b shows a bottle curl at 65°C for the bottles according to the test point 2. Fig. 4c shows a bottle curl at 65°C for the bottles according to the test point 3. Fig. 4d shows a bottle curl at 65°C for the bottles according to the test point 4.

During experimental tests, it was noted that a type of a bottle had an effect on washability. For example, different bottles had different behavior in washing conditions.

For all tested bottles, labels comprising PSA comprising the wash-off adhesive according to the specification had improved washability compared to bottles having labels comprising conventional PSA.

*Example 3: Tackification*

The wash-off additive was formulated with water-based acrylic adhesives and tested for tackification by using bottles according to Table 2.

Table 2 shows results for the tackification. As can be seen, the wash-off additive according to this specification did not have a clear effect on the tackification. Particularly, the wash-off additive did not improve tackification, at least for plastic bottles.

Table 2.

| Tackification | wash-off additive 0 wt.% | wash-off additive 20 wt.% | wash-off additive 5 wt.% |
|---|---|---|---|
| Glass | 6 | 8 | 8 |
| PET | 11 | 8 | 11 |
| HDPE | 5 | 2 | 6 |

*Example 4A: PET bottle recycling at +65°C*

Adhesive according to this specification, which comprised the grafted rosin ester comprising PEG, was blended with different water-based acrylic adhesives, and tested in tests at +65°C in alkaline conditions having 1% NaOH.

The test points included the following amounts of the additive: from 0 to 20 wt.% (by dry weight) from a total dry weight of the acrylic adhesive. For these tests, machine oriented and biaxially oriented polypropylene films were used as the face film.

Some test points included from 0.2 to 0.5 wt.% (by dry weight) a nonionic biodegradable surfactant. It was noted that the addition of the surfactant further improved the washability at +65°C, when used together with the wash-off additive.

According to the test results, an addition of more than 5 wt.% (by dry weight) of the wash-off additive into the acrylic adhesive improved washability of the labels compared to the test point of 0 wt.%. With the addition of 10 wt.%, improvement in the washability was even more significant.

Thus, an addition of the wash-off additive of more than 5 wt.%, particularly from 10 to 20 wt.% (by dry weight) clearly improved washability at +65°C. The best washability results were shown with the wash-off additive addition from 15 to 20%.

*Example 4B: PET bottle recycling at +65°C, comparative examples*

The machine oriented and biaxially oriented polypropylene films were used as the face film for these tests.

Conventional rosin ester dispersion without the wash-off additive was blended with different water-based acrylic adhesives and tested in tests at +65°C by using the same conditions as in the Example 4A.

Further, conventional PEG-solution was blended with different water-based acrylic adhesives and tested in tests at +65°C by using the same concentration range as in the Example 4A.

An addition of the conventional rosin ester dispersion did not improved washability at +65C. On the contrary, the conventional rosin ester dispersion even decreased the washability.

Further, an addition of the PEG-solution did not improved washability at +65C, and the adhesive was poorly washable, or not at all washable.

*Example 5A: HDPE bottle recycling at +40°C*

Wash-off adhesive according to this specification, which comprised the grafted rosin ester comprising PEG, was blended with different water-based acrylic adhesives, and tested in wash-off tests at +40°C in plain water.

The test points included paper labels. Amount of the wash-off additive was from 0 to 20 wt.% (by dry weight) from a total dry weight of the acrylic adhesive.

An addition of the wash-off additive of at least 5 wt.% (by dry weight) clearly improved washability at +40°C in water. With the addition of 10 wt.%, improvement in the washability was even more significant. For all test points, complete delamination took only approximately 5 min, and within 10 min the paper had disintegrated completely.

*Example 5B: HDPE bottle recycling at +40°C, comparative examples*

Conventional rosin ester dispersion without the wash-off additive was blended with different water-based acrylic adhesives and tested in wash-off tests at +40°C by using the same conditions as in the Example 5A.

Further, conventional PEG-solution was blended with different water-based acrylic adhesives and tested in wash-off tests at +40°C.

An addition of the conventional rosin ester dispersion did not improved washability at +40C. On the contrary, the conventional rosin ester dispersion decreased the washability.

Further, an addition of the PEG-solution did not improved washability at +40C, and the adhesive was poorly washable, or not at all washable.

*Example 6: Hydrophobicity*

The wash-off additive was formulated with different water-based acrylic adhesives and tested for hydrophobicity.

According to the test results, the wash-off additive clearly increased hydrophobicity, further improving washability of acrylic adhesives comprising the adhesive and improving delamination of labels from PET and polyolefin bottles.

The novel additive had many advantages over conventional solutions during the experimental tests. Conventional rosin ester dispersions were not able to work as a wash-off additive. Further, PEG solution did not improve wash-off properties of acrylic adhesives at all. Surprisingly, the wash-off additive according to this specification comprising the grafted rosin ester was able to efficiently improve acrylic polymer properties in low temperature washing processes at 40°C and at 65-75°C, and was able to improve delamination during washing process.

The invention has been described with the aid of illustrations and examples. The invention is not limited solely to the above presented embodiments but may be modified within the scope of the appended claims.

**Claims**

1. A method for manufacturing a label comprising a face and a pressure sensitive adhesive layer for adhering the label to a surface of an item to be labelled,
   wherein the method comprises:

   - applying an acrylic adhesive onto a first surface of the face, the acrylic adhesive optionally comprising 2-ethylhexyl acrylate,

      wherein the acrylic adhesive comprises a wash-off additive, the wash-off additive comprising

         ∘ an aqueous phase,
         ∘ a resinous material preferably selected from a group consisting of a hydrocarbon resin, an alkyd resin, a polyamide resin, a rosin resin, and mixtures thereof, and
         ∘ a grafted rosin ester which is preferably a rosin ester grafted with a capped polyalkylene glycol, wherein the capped polyalkylene glycol is preferably a polyalkylene glycol end-capped by an alkyl ether,

      wherein an amount of the wash-off additive is at least 4 wt.%, preferably from 5 to 25 wt.%, and most preferably from 10 to 20 wt.%, calculated from total dry weight of the acrylic adhesive, and

   - drying the acrylic adhesive in order to form an acrylic pressure sensitive adhesive onto the first surface of the face,

   thereby obtaining the label.

2. The method according to claim 1, wherein

   - a polymer gel content of the acrylic adhesive is at least 10%, preferably at least 50%, more preferably at least 60%, and 75% at the most, and/or
   - a mean particle size of the acrylic adhesive is at least 100 nm and 800 nm at the most, measured as a mean particle diameter.

3. A label comprising a face and a pressure sensitive adhesive layer for adhering the label to a surface of an item to be labelled,

      wherein the pressure sensitive adhesive layer comprises

- an acrylic pressure sensitive adhesive, the acrylic pressure sensitive adhesive optionally comprising 2-ethylhexyl acrylate,

wherein the acrylic pressure sensitive adhesive comprises a wash-off additive, the wash-off additive comprising

○ a resinous material preferably selected from a group consisting of a hydrocarbon resin, an alkyd resin, a polyamide resin, a rosin resin, and mixtures thereof, and
○ a grafted rosin ester which is preferably a rosin ester grafted with a capped polyalkylene glycol, wherein the capped polyalkylene glycol is preferably a polyalkylene glycol end-capped by an alkyl ether,

wherein an amount of the wash-off additive is at least 4 wt.%, preferably from 5 to 25 wt.%, and most preferably from 10 to 20 wt.%, calculated from total dry weight of the acrylic adhesive.

4. The method or the label according to any of the preceding claims, wherein an amount of the grafted rosin ester with respect to the resinous material is from 1 wt.% to 8 wt.%.

5. The method or the label according to any of the preceding claims, wherein the polyalkylene glycol is a polyethylene glycol.

6. The method or the label according to any of the preceding claims, wherein

- the resinous material comprises or consists of the rosin resin, and/or
- molar ratio between the rosin ester and the capped polyalkylene glycol is 0.05:1 to 1:1.

7. The method or the label according to any of the preceding claims, wherein the alkyl ether is a methyl ether.

8. The method or the label according to any of the preceding claims, wherein the label is a linerless label.

9. The method or the label according to any of the preceding claims 1 to 7, wherein the label is a label laminate comprising a release liner.

10. The method or the label according to any of the preceding claims, wherein

- the face comprises a thermoplastic film, which is preferably an oriented thermoplastic film, more preferably a biaxially oriented thermoplastic film, and/or
- the face is configured to shrink asymmetrically.

11. The method or the label according to any of the preceding claims, wherein the face comprises a uniaxially oriented thermoplastic film, which is uniaxially oriented in a machine direction of said film.

12. The method or the label according to any of the preceding claims, wherein the face comprises a polypropylene film or a glycol modified polyethylene terephthalate film.

13. The method or the label according to any of the preceding claims 1 to 9, wherein the face comprises a paper.

14. The method or the label according to any of the preceding claims, wherein the label is a direct thermal label.

15. The method or the label according to any of the preceding claims, wherein the label is a wash-off label.

16. A beverage bottle comprising the label according to any of the preceding claims 4 to 15 adhered to a surface of the beverage bottle, wherein, preferably, the label and the beverage bottle have such densities wherein one has a density of more than water and the other has a density of less than water.

Fig.1

Fig.2

101

100

$S_Y$

$S_X$

ABC

2

DIR2

DIR1

Fig.3

Fig.4a

Fig.4b

Fig.4c

Fig.4d

# EUROPEAN SEARCH REPORT

**Application Number**

EP 24 22 2219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/200567 A1 (ARIZONA CHEMICAL CO LLC [US]) 18 December 2014 (2014-12-18) | 1-11, 13-16 | INV. C09J7/38 |
| Y | * abstract * * page 2, line 25 - line 31 * * page 7, line 1 - line 14 * * page 9, line 5 - line 23 * * page 11, line 11 - line 6; claims 1,6,11,13-21,26; examples; table 2 * | 12 | C09J133/08 G09F3/10 |
| Y | WO 2022/026055 A1 (LAWTER INC [US]) 3 February 2022 (2022-02-03) | 12 | |
| A | * abstract * * paragraphs [0006], [0008], [0022] - paragraph [0025] * * paragraphs [0047], [0048], [0070], [0071], [0073], [0074] - paragraph [0076]; claims 1,4,7,8,14,15; examples * | 1-11, 13-16 | |
| X,P | WO 2024/003440 A1 (UPM RAFLATAC OY [FI]) 4 January 2024 (2024-01-04) | 1-12, 14-16 | |
| | * abstract * * page 1, line 20 - page 2, line 19 * * page 3, line 30 - page 4, line 16 * * page 15, line 5 - line 10 * * page 16, line 1 - line 25 * * page 19, line 6 - line 15 * * page 20, line 5 - line 8; claims * | | **TECHNICAL FIELDS SEARCHED (IPC)** C09J G09F C08F |
| E | WO 2025/003559 A1 (UPM RAFLATAC OY [FI]) 2 January 2025 (2025-01-02) * abstract * * page 1, line 25 - line 35 * * page 3, line 1 - line 15 * * page 4, line 25 - page 5, line 32 * * page 10, line 5 - line 14 * * page 25, line 9 - line 30; claims * | 1-11, 13-16 | |

The present search report has been drawn up for all claims

| Place of search | Date of completion of the search | Examiner |
|---|---|---|
| Munich | 16 May 2025 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 578 923 A1**

## ANNEX TO THE EUROPEAN SEARCH REPORT
## ON EUROPEAN PATENT APPLICATION NO.

EP 24 22 2219

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | Publication date | Patent family member(s) | Publication date |
|---|---|---|---|
| WO 2014200567 A1 | 18-12-2014 | CN 105246995 A | 13-01-2016 |
| | | EP 3008141 A1 | 20-04-2016 |
| | | JP 2016521745 A | 25-07-2016 |
| | | KR 20160005779 A | 15-01-2016 |
| | | US 2016122607 A1 | 05-05-2016 |
| | | WO 2014200567 A1 | 18-12-2014 |
| WO 2022026055 A1 | 03-02-2022 | AU 2021315429 A1 | 23-02-2023 |
| | | BR 112023001304 A2 | 04-04-2023 |
| | | CA 3189794 A1 | 03-02-2022 |
| | | CL 2023000230 A1 | 30-06-2023 |
| | | CN 116234886 A | 06-06-2023 |
| | | CO 2023000791 A2 | 05-04-2023 |
| | | EP 3945120 A1 | 02-02-2022 |
| | | EP 4189025 A1 | 07-06-2023 |
| | | ES 2967611 T3 | 03-05-2024 |
| | | PL 3945120 T3 | 02-04-2024 |
| | | PL 4189025 T3 | 22-04-2025 |
| | | US 2023212436 A1 | 06-07-2023 |
| | | WO 2022026055 A1 | 03-02-2022 |
| WO 2024003440 A1 | 04-01-2024 | CN 119452059 A | 14-02-2025 |
| | | EP 4547773 A1 | 07-05-2025 |
| | | WO 2024003440 A1 | 04-01-2024 |
| WO 2025003559 A1 | 02-01-2025 | FI 20235765 A1 | 31-12-2024 |
| | | WO 2025003559 A1 | 02-01-2025 |

EPO FORM P0459

For more details about this annex : see Official Journal of the European Patent Office, No. 12/82